(19) Europäisches Patentamt
European Patent Office
Office européen des brevets

(11) **EP 1 890 920 B1**

(12) **EUROPÄISCHE PATENTSCHRIFT**

(45) Veröffentlichungstag und Bekanntmachung des Hinweises auf die Patenterteilung:
**24.04.2013 Patentblatt 2013/17**

(21) Anmeldenummer: 06763501.1

(22) Anmeldetag: **02.06.2006**

(51) Int Cl.:
*B60T 8/17* *(2006.01)*     *B62D 6/00* *(2006.01)*
*B62D 5/00* *(2006.01)*     *B62D 5/04* *(2006.01)*

(86) Internationale Anmeldenummer:
**PCT/EP2006/062894**

(87) Internationale Veröffentlichungsnummer:
**WO 2006/128916 (07.12.2006 Gazette 2006/49)**

(54) **FAHRZUSTANDSANGEPASSTE, AUF LENKEINGRIFFEN BASIERENDE FAHRDYNAMIKREGELUNG**

VEHICLE DYNAMICS CONTROL ADAPTED TO DRIVING STATE AND BASED ON STEERING INTERVENTIONS

REGULATION DE DYNAMIQUE DE VEHICULE ADAPTEE A L'ETAT DE MOUVEMENT ET FONDEE SUR DES INTERVENTIONS SUR L'ANGLE DE BRAQUAGE

(84) Benannte Vertragsstaaten:
**DE FR HU IT**

(30) Priorität: **02.06.2005 DE 102005025287**

(43) Veröffentlichungstag der Anmeldung:
**27.02.2008 Patentblatt 2008/09**

(73) Patentinhaber: **Continental Teves AG & Co. oHG 60488 Frankfurt am Main (DE)**

(72) Erfinder:
• **FRITZ, Stefan**
  **64390 Erzhausen (DE)**
• **MUNTU, Matthias**
  **60486 Frankfurt am Main (DE)**
• **RASTE, Thomas**
  **61440 Oberursel (DE)**
• **BAUER, Urs**
  **71640 Ludwigsburg (DE)**
• **CISARZ, Peter**
  **65719 Hofheim (DE)**

(56) Entgegenhaltungen:
WO-A-2005/047086      DE-A1- 10 141 273
US-A1- 2005 043 874   US-B1- 6 895 318

Printed by Jouve, 75001 PARIS (FR)

**Beschreibung**

Die Erfindung betrifft eine Vorrichtung zum Regeln der Fahrdynamik eines Fahrzeugs, mit Mitteln zum Erfassen wenigstens einer einen Fahrzustand repräsentierenden Fahrzustandsgröße und mit einem Fahrdynamikregler zum Ermitteln eines Zusatzlenkwinkels, nach dessen Maßgabe eine Lenkbewegung zusätzlich zu der durch einen Fahrzeugführer kommandierten Lenkbewegung ausführbar ist. Die Erfindung betrifft zudem ein Verfahren zum Regeln der Fahrdynamik, zu dessen Durchführung die Vorrichtung geeignet ist.

Zur Beeinflussung der Horizontaldynamik eines Fahrzeugs werden heute Regelsysteme eingesetzt, die üblicherweise auf der Basis einer Gierratenregelung Eingriffe in das Bremsensystem und das Motormanagement des Fahrzeugs vornehmen. Diese Eingriffe führen jedoch zu einer Fahrzeugverzögerung bzw. zu Längskraftschwankungen, die für den Fahrzeugführer deutlich spürbar sind, und können daher aus Komfortgründen nur in fahrdynamisch kritischen Situationen zur Stabilisierung des Fahrzeugs eingesetzt werden.

Grundsätzlich ist es jedoch auch denkbar, dass eine Fahrdynamikregelung im Bereich unkritischer Fahrzustände vorgenommen wird, um das Fahrzeughandling zu verbessern und die Agilität zu erhöhen. Als geeignet haben sich in diesem Zusammenhang Lenkeingriffe erwiesen, bei denen mittels einer so genannten aktiven Lenkung fahrerunabhängige Lenkbewegungen ausgeführt werden, die von dem Fahrzeugführer nicht als Komfortbeeinträchtigung wahrgenommen werden.

Eine auf Lenkeingriffen basierende Fahrdynamikregelung ist dabei sowohl dazu in der Lage, Fahrzeuginstabilitäten im Bereich kritischer Fahrzustände auszuregeln als auch das Fahrverhalten des Fahrzeugs im Bereich unkritischer Fahrzustände, der im Folgenden als Handlingbereich bezeichnet wird, zu verbessern. Die Anforderungen an das Regelungssystem unterscheiden sich jedoch in den verschiedenen Fahrzustandsbereichen deutlich.

Aus der WO2005/047086 A1 sind ein Verfahren und eine Vorrichtung zur Regelung der Fahrdynamik eines Fahrzeuges bekannt, bei denen eine Lenkbewegung nach Maßgabe einer Stellgröße vorgenommen wird, die in Abhängigkeit einer Abweichung zwischen einem Sollwert und einem erfassten Istwert einer Fahrzustandsgröße (wie. Z.B. der Gierrate) berechnet wird. Wenigstens ein Zugehörigkeitsgrad eines erfassten Wertes eines von einem Fahrer eingestellten Lenkwinkels und/oder Lenkwinkelgradienten zu einer vorgegebenen unscharfen Menge wird ermittelt, und ein Wert der Stellgröße wird in Abhängigkeit des Zugehörigkeitsgrades verändert. Bevorzugt kommen hierbei unterschiedliche Reglerparametersätze für den unkritischen und den kritischen Fahrbereich zum Einsatz.

Die US 2005/0043874 A1 offenbart ein Regelsystem für eine Lenkung eines Fahrzeugs, das ein Referenzmodell, ein mit dem Referenzmodell kommunizierende Steuerungseinheit eines das Fahrzeug beeinflussenden Aktuators, eine Zustandsschätzeinrichtung zur Ermittlung eines Istzustands und eine Regelungseinheit mit einem geschwindigkeitsabhängigen Regelalgorithmus umfasst.

Ferner ist aus der US 6,8956,318 B1 ein Lenkunterstützungsregler bekannt, der einen Fahrer dabei unterstützt, eine Übersteuertendenz eines Fahrzeugs zu überwinden. Der Lenkunterstützungsregler leitet eine Übersteuertendenz des Fahrzeugs aus einem Vergleich von geschätzter und gemessener Gierrate ab, wobei die Regelung eine nichtlineare Region aufweist und ein kompensierendes Drehmoment ermittelt.

Weiterhin ist in der DE 101 41 273 A1 ein Verfahren zur Erhöhung der Fahrstabilität bei einem Fahrzeug offenbart, welches durch einen Regeleingriff am Fahrzeug ein einer Fahrzeug-Instabilität entgegenwirkendes Drehmoment bewirkt, wobei das Maß des Regeleingriffs abhängig ist von der Differenz aus dem Quotienten von Fahrzeugquerbeschleunigung und Fahrzeuggeschwindigkeit einerseits und der tatsächlich auftretenden Gierrate andererseits. Vorzugsweise erfolgt eine Vorsteuerung, die unabhängig von der gemessenen Gierrate ein stabilisierendes Lenkkommando abgibt, welches somit unverzögert eine Stabilisierung bewirken kann.

Es ist eine Aufgabe der Erfindung eine Vorrichtung zum Regeln der Fahrdynamik eines Fahrzeugs nach dem Oberbegriff des Patentanspruchs 1 sowie ein Verfahren nach dem Oberbegriff des Patentanspruchs 7 zu schaffen, bei denen die Lenkeingriffe möglichst optimal an den vorliegenden Fahrzustandsbereich angepasst werden können.

Erfindungsgemäß wird diese Aufgabe dadurch gelöst, dass die Vorrichtung zum Regeln der Fahrdynamik eines Fahrzeugs wenigstens zwei Regeleinheiten umfasst, die jeweils einem Fahrzustandsbereich zugeordnet sind, dass die Vorrichtung ein Bestimmungsmittel zum Bestimmen eines vorliegenden Fahrzustandes aufweist, in dem der vorliegende Fahrzustand ausgehend von der Fahrzustandsgröße ermittelbar ist, und dass die Vorrichtung ein mit dem Bestimmungsmittel in Verbindung stehendes Aktivierungsmittel aufweist, mit dem eine Regeleinheit freischaltbar ist, die dem ermittelten Fahrzustandsbereich zugeordnet ist.

Ferner wird diese Aufgabe dadurch gelöst, dass der Zusatzlenkwinkel bei dem Verfahren in wenigstens zwei Regeleinheiten bestimmt wird, dass ausgehend von der Fahrzustandsgröße ein Fahrzustandsbereich ermittelt wird und dass jeweils die Regeleinheit frei geschaltet wird, die dem ermittelten Fahrzustandsbereich zugeordnet ist. Nach der Freischaltung kann die von der entsprechenden Regeleinheit bestimmte Stellgröße an das Aktuatörsystem übermittelt werden.

Die Erfindung ermöglicht es, verschiedene Regeleinheiten zum Ermitteln des Zusatzlenkwinkels vorzusehen, die jeweils an einen bestimmten Fahrzustandsbereich angepasst sind. Die Freischaltung der verschiedenen Regeleinheiten in den ihnen zugeordneten Fahrzustandsbereichen wird durch das Aktivierungsmittel vorgenommen, das dafür auf die Ergebnisse einer Fahrzustandsbereichsermittlung zurückgreift.

Mit Vorteil werden damit ein Regelungssystem und ein Regelungsverfahren bereitgestellt, die optimal an die unterschiedlichen Anforderungen angepasst werden können, die in den verschiedenen Fahrzustandsbereichen bestehen. Das Regelungssystem weist zudem eine besonders einfache Struktur auf. Es ist damit besonders einfach herzustellen und an das konkrete Einsatzgebiet, insbesondere an den konkreten Fahrzeugtyp, in dem es zum Einsatz gelangen soll, anzupassen.

Unter einem Fahrzustandsbereich wird im Rahmen der Erfindung insbesondere eine vorgebbare Menge von Fahrzuständen verstanden. Charakterisiert werden die Fahrzustandsbereiche beispielsweise durch vorgegebene Schwellenwerte einer oder mehrerer Fahrzustandsgrößen.

Als besonders vorteilhaft hat es sich dabei erwiesen, dass zumindest ein Handlingbereich und ein Bereich kritischer Fahrzustände als Fahrzustandsbereiche unterschieden werden, in denen jeweils unterschiedliche Regelungsziele vorgegeben werden. Erfindungsgemäß ist daher eine erste Regeleinheit des Fahrdynamikreglers dem Handlingbereich zugeordnet und eine zweite Regeleinheit dem Bereich kritischer Fahrzustände.

Im Handlingbereich besteht das Regelungsziel darin, den Phasenverzug, der sich infolge der Elastizität von Fahrwerkselementen und der Fahrzeugträgheit zwischen den Lenkvorgaben des Fahrzeugführers und der Fahrzeugreaktion ergibt, zu minimieren.

Zur Erreichung dieses Ziels enthält die erste Regeleinheit einen Vorsteuerbestandteil, in dem ein Steueranteil des Zusatzlenkwinkels in Abhängigkeit von einem in einem ersten Fahrzeugmodell ermittelten Gierratenreferenzwert bestimmbar ist.

Bei dem ersten Fahrzeugmodell handelt es sich um ein statisches Fahrzeugmodell, worunter hier ein Fahrzeugmodell verstanden wird, in dem die Fahrzeugträgheit nicht berücksichtigt wird.

In einem derartigen Modell besteht kein Phasenverzug zwischen der Lenkvorgabe des Fahrers und dem Referenzgierratensignal, so dass es im Hinblick auf den genannte Regelungszweck besonders gut im Handlingbereich eingesetzt werden kann.

Um zusätzlich auch die Fahrzeugreaktion bei den Regeleingriffen im Handlingbereich berücksichtigen zu können, ist es ferner besonders zweckmäßig, dass die erste Regeleinheit einen Regelungsbestandteil enthält, in dem ein Regelanteil des Zusatzlenkwinkels in Abhängigkeit von einer Abweichung zwischen einem Gierratenistwert und dem in dem ersten Fahrzeugmodell ermittelten Gierratenreferenzwert bestimmbar ist.

Vorzugsweise ist dabei der in der ersten Regeleinheit bestimmbare Zusatzlenkwinkel eine Summe aus dem Steueranteil und dem Regelanteil, wobei der Steueranteil einen größeren Anteil an der Summe hat als der Regelanteil.

Mit Vorteil wird der Zusatzlenkwinkel somit im Wesentlichen durch den Steueranteil bestimmt.

Erfindungsgemäß enthält die zweite Regeleinheit einen Regelungsbestandteil, in dem ein Regelanteil des Zusatzlenkwinkels in Abhängigkeit von einer Abweichung zwischen dem Gierratenistwert und einem Gierratenreferenzwert bestimmbar ist, wobei der Gierratenreferenzwert in dem ersten oder in einem zweiten Fahrzeugmodell ermittelt wird.

Mit Vorteil ist zudem eine dritte Regeleinheit umfasst, die eine Bremskraft an wenigstens einer Radbremse des Fahrzeugs und/oder ein Motormoment eines Antriebsmotors des Fahrzeugs in Abhängigkeit von einer Abweichung zwischen dem Gierratenistwert und dem in dem zweiten Fahrzeugmodell ermittelten Gierratenreferenzwert bestimmt.

Diese dritte Regeleinheit entspricht im Wesentlichen einem herkömmlichen Standard-ESP-System, das zur weiteren Verbesserung der Fahrstabilität im Bereich kritischer Fahrzustände in die Erfindung integrierbar ist.

Bei dem zweiten Fahrzeugmodell handelt es sich vorzugsweise um ein dynamisches Fahrzeugmodell, worunter hier insbesondere ein Modell verstanden wird, das die Fahrzeugträgheit berücksichtigt. Gegenüber einem statischen Fahrzeugmodell erlaubt ein dynamisches Fahrzeugmodell, das tatsächliche Fahrzeugverhalten genau zu ermitteln, und ist daher für einen Einsatz im Bereich kritischer Fahrzustände besonders gut geeignet.

Erfindungsgemäß ist es vorgesehen, dass das Bestimmungsmittel den vorliegenden Fahrzustand bestimmt anhand eines Vergleichs zwischen einer Abweichung wenigstens eines Istwerts der Fahrzustandsgröße von einem Referenzwert der Fahrzustandsgröße und wenigstens einem vorgegebenen ersten Schwellenwert und/oder anhand eines Vergleichs zwischen wenigstens einem Istwert der Fahrzustandsgröße und wenigsten einem vorgegebenen zweiten Schwellenwert.

Hierbei ermittelt das Bestimmungsmittel einen Fahrzustand im Handlingbereich, wenn der Betrag der Abweichung zwischen dem Istwert der Fahrzustandsgröße und dem Referenzwert kleiner ist als der vorgegebene erste Schwellenwert und/oder wenn der Betrag der Fahrzustandsgröße kleiner ist als der vorgegebene zweite Schwellenwert.

Einen Fahrzustand im Bereich kritischer Fahrzustände ermittelt das Bestimmungsmittel, wenn der Betrag der Abweichung zwischen dem Istwert der Fahrzustandsgröße und dem Referenzwert größer ist als der vorgegebene erste Schwellenwert und/oder, wenn der Betrag der Fahrzustandsgröße größer ist als der vorgegebene zweite Schwellenwert.

Ferner hat es sich als vorteilhaft erwiesen, dass der bei der Ermittlung des Fahrzustands verwendete Referenzwert der Fahrzustandsgröße in dem zweiten Fahrzeugmodell berechnet wird. Es handelt sich damit um das Referenzmodell, das auch der Erkennung des vorliegenden Fahrzustands bzw. dessen Zuordnung zu einem Fahrzustandsbereich zugrunde liegt.

Insbesondere bei der Verwendung des zweiten Fahrzeugmodells zur Berechung des Referenzwerts der Fahrzustandsgröße, der bei der Ermittlung des Fahrzustands zugrunde gelegt wird, könnte es jedoch auf Grund der Regeleingriffe im Handlingbereich zu ungewollten Regeleingriffen der im Bereich kritischer Fahrzustände aktiven Regler kommen.

Erfindungsgemäß ist es vorgesehen, dass der bei der Bestimmung des vorliegenden Fahrzustands verwendete Referenzwert der Fahrzustandsgröße beim Vorliegen eines Fahrzustands im Handlingbereich in Abhängigkeit von einer Summe aus der Lenkwinkelvorgabe des Fahrzeugführers und dem Zusatzlenkwinkel berechnet wird.

Hierdurch werden die Regeleingriffe bei der Fahrzustandsanalyse berücksichtigt und ungewollte stabilisierende Regeleingriffe im Handlingbereich vermieden.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Figuren.

Von den Figuren zeigt

Fig. 1     ein Blockdiagramm eines Regelsystems zur Fahrdynamikregelung mit einem Standard-ESP-System und einem Regelungssystem zum Bestimmen und Einstellen eines Zusatzlenkwinkels,

Fig. 2a    ein Diagramm, das den zeitlichen Verlauf der Istgierrate und einer Referenzgierrate darstellt,

Fig. 2b    ein weiteres Diagramm, das den zeitlichen Verlauf der Istgierrate und einer Referenzgierrate darstellt,

Fig. 3     ein weiteres Blockdiagramm eines Regelsystems zur Fahrdynamikregelung mit einem Standard-ESP-System und einem Regelsystem zum Bestimmen und Einstellen eines Zusatzlenkwinkels,

Fig. 4     ein Blockdiagramm zur Darstellung der Berechnung der Referenzgierrate in dem statischen Fahrzeugmodell innerhalb des Regelsystems zum Bestimmen des Zusatzlenkwinkels,

Fig. 5     ein Blockdiagramm eines Reglers zum Bestimmen einer Stellgröße, die im Handlingbereich der Zusatzlenkwinkelanforderung entspricht und

Fig. 6     ein Blockdiagramm eines Reglers zum Bestimmen einer Stellgröße, die im Bereich kritischer Fahrzustände der Zusatzlenkwinkelanforderung entspricht.

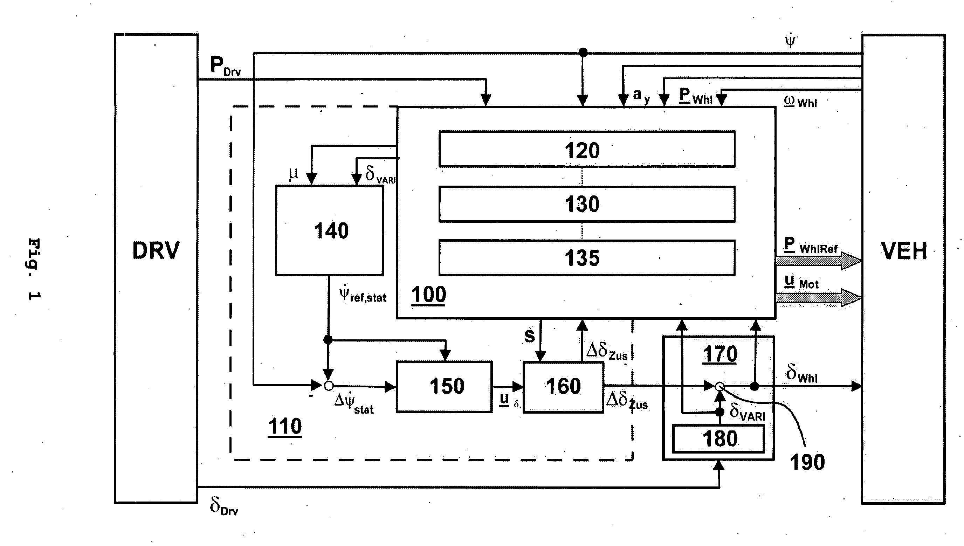

In der Figur 1 ist insbesondere ein Blockdiagramm eines Fahrdynamikreglers gezeigt, der neben einem Standard-ESP-System 100 ein Regelsystem 110 (in der Figur gestrichelt eingefasst) zum Ermitteln des Zusatzlenkwinkels $\Delta\delta_{Zus}$ umfasst. Dargestellt ist auch welche Eingangsgrößen des Fahrdynamikreglers von dem Fahrzeugführer (in der Figur 1 durch den Block "DRV" veranschaulicht) vorgegeben und welche der Eingangsgrößen durch Sensoren des Fahrzeugs (in der Figur 1 durch den Block "VEH" veranschaulicht) erfasst werden.

Der Fahrdynamikregler kann dabei als Hardware oder als Softwareprogramm realisiert sein, das in einem Steuergerät des Fahrzeugs abgelegt und ausgeführt wird.

Das Standard-ESP-System 100 ist dem Fachmann grundsätzlich bekannt. Es enthält insbesondere einen Block 120, in dem eine Referenzgierrate $\dot{\Psi}_{ref,dyn}$ berechnet wird. Der Berechnung wird ein dynamisches Fahrzeugmodell, wie es beispielsweise in der deutschen Offenlegungsschrift DE 195 15 059 A1 beschrieben ist, zugrunde gelegt, wobei später noch darauf eingegangen wird, welche Eingangsparameter für das Modell verwendet werden.

Aus den Regelabweichungen $\Delta\dot{\psi}_{dyn}$ zwischen der Referenzgierrate $\dot{\Psi}_{ref,dyn}$ und der beispielsweise mittels eines Gierratensensors gemessenen Istgierrate $\dot{\psi}$ des Fahrzeugs bestimmt ein Gierratenregler in dem Block 130 einen Satz radindividueller Bremsdrücke $\underline{P}_{Whlref}$ sowie einen Satz Motorparameter $\boldsymbol{u}_{Mot}$ für stabilisierende Bremsen- und/oder Motoreingriffe, die in dem Block 135 in entsprechende Stellanforderungen umgewandelt werden.

Bei der Bestimmung der Stellgrößen werden vorzugsweise auch weitere Fahrzustandsgrößen wie die auf das Fahrzeug wirkende Querbeschleunigung $\alpha_y$ und der Satz von Raddrehzahlen $\underline{\omega}_{Whl}$, aus dem sich die Fahrzeuggeschwindigkeit $v$ ermitteln lässt, sowie Betriebsparameter des Fahrzeugs, wie der von dem Fahrzeugführer eingestellte Bremsdruck $P_{Drv}$ berücksichtigt. Dies kann beispielsweise durch eine Adaption der Reglerparameter erfolgen.

Ferner umfasst das Standard-ESP-System eine in der Figur 1 nicht dargestellte Aktivierungslogik, die anhand einer Auswertung der bereits beschriebenen Eingangsgrößen des Standard-ESP-Systems 100 überprüft, ob ein kritischer Fahrzustand vorliegt, der eine Regelung durch das System erforderlich macht. In diesem Fall überträgt die Aktivierungslogik die ermittelten Stellanforderungen an das zur Durchführung der Stelleingriffe vorgesehene Aktuatorsystem des Fahrzeugs; andernfalls ist die Übertragung unterbrochen.

Erkannt wird ein kritischer Fahrzustand beispielsweise dann, wenn der Betrag der Gierratenabweichung $\Delta\dot{\psi}_{dyn}$

und/oder der Betrag der Schwimmwinkelgeschwindigkeit $\dot{\beta}$ des Fahrzeugs und/oder der Betrag der Querbeschleunigung $\alpha_y$ jeweils einen vorgegebenen Schwellenwert überschreiten. Die Schwimmwinkelgeschwindigkeit $\dot{\beta}$ kann dabei so aus den Eingangsgrößen berechnet bzw. geschätzt werden, wie es in der deutschen Offenlegungsschrift DE 195 15 059 A1 beschrieben ist.

Das Standard-ESP-System wird ergänzt durch das Regelsystem 110 zum Bestimmen eines Zusatzlenkwinkels $\Delta\delta_{Zus}$. Dieses System verfügt über ein eigenes Fahrzeugmodell, in dem innerhalb des Blocks eine Referenzgierrate $\dot{\psi}_{ref,stat}$ berechnet wird. Bei dem Fahrzeugmodell, auf das später näher eingegangen wird, handelt es sich insbesondere um ein statisches Fahrzeugmodell.

Der Gierratenregler 150 bestimmt direkt aus der Referenzgierrate $\dot{\psi}_{ref,stat}$ sowie aus der Regelabweichung $\Delta\dot{\psi}_{stat}$ zwischen der Referenzgierrate $\dot{\psi}_{ref,stat}$ und der Istgierrate $\dot{\psi}$ des Fahrzeugs die Stellgrößen $\boldsymbol{u}_{HYC}$ und $\boldsymbol{u}_{ESPII}$, die in der Figur 1 zu der Größe $\underline{\boldsymbol{u}}_\delta = (\boldsymbol{u}_{HYC}, \boldsymbol{u}_{ESPII})$ zusammengefasst sind. Es handelt sich dabei um Lenkwinkelstellanforderungen, die zusätzlich zu dem durch den Fahrzeugführer kommandierten Lenkwinkel an den lenkbaren Rädern des Fahrzeugs eingestellt werden. Wie noch genauer zu erläutern ist, enthält der Gierratenregler 150 dabei zwei separate Regler, von denen der eine die Stellgröße $\boldsymbol{u}_{HYC}$ und der andere die Stellgröße $\boldsymbol{u}_{ESPII}$ berechnet.

Eine Aktivierungslogik in dem Block 160 schaltet entweder den einen oder den anderen Regler frei, wobei die von dem frei geschalteten Regler bestimmte Stellgröße an den Lenkungsaktuator 170 bzw. dessen Steuergerät übertragen, die in dem anderen Regler bestimmte Stellgröße jedoch blockiert wird. Welche der beiden Stellgrößen $\boldsymbol{u}_{HYC}$ und $\boldsymbol{u}_{ESPII}$ dabei weitergeleitet wird, bestimmt die Aktivierungslogik aus dem Ergebnis der Fahrsituationserkennung in dem Standard-ESP-System 100, das in Form eines so genannten Flags S von diesem bereitgestellt wird.

Das Flag S nimmt den Wert 1 an, wenn die Aktivierungslogik des Standard-ESP-Systems 100 das Vorliegen eines kritischen Fahrzustands ermittelt, der einen Eingriff des Standard-ESP-Systems erforderlich macht. Ansonsten hat das Flag den Wert 0. Bei dem Lenkungsaktuator 170 handelt es sich beispielsweise um eine Überlagerungslenkung, die über ein Getriebe in den Lenkstrang des Fahrzeugs eingreift, und die Überlagerung des von dem Fahrer kommandierten Lenkwinkels mit einem zusätzlichen Lenkwinkel, bzw. die Ausführung einer zusätzlichen Lenkbewegung nach Maßgabe des zusätzlichen Lenkwinkels ermöglicht.

In einer anderen Ausführungsform der Erfindung kann es sich bei dem Lenkungsaktuator auch um eine Steer-by-Wire-Lenkung handeln, bei der auch die Lenkvorgaben des Fahrzeugführers als elektronische Signale an eine Stelleinrichtung übermittelt werden, welche den gewünschten Lenkwinkel dann an den lenkbaren Rädern des Fahrzeugs einstellt. Hier kann das elektronische Signal, welches die von dem Regelsystem 110 bestimmte Stellgröße repräsentiert, in einfacher Weise mit der Lenkvorgabe des Fahrzeugführers kombiniert werden.

Neben dem Einstellen des Zusatzlenkwinkels $\Delta\delta_{Zus}$ kann durch den Lenkungsaktuator auch die Funktion einer variablen geschwindigkeitsabhängigen Lenkübersetzung realisiert werden, bei der beispielsweise im unteren Geschwindigkeitsbereich eine sehr direkte Lenkübersetzung eingestellt wird, um dem Fahrzeugführer das Manövrieren zu erleichtern, und im oberen Geschwindigkeitsbereich eine sehr direkte Lenkübersetzung gewählt wird, um einen störungsfreien Geradeauslauf des Fahrzeugs sicherzustellen.

In dem Block 180 wird dafür aus der Fahrzeuggeschwindigkeit v und der Lenkwinkelvorgabe $\delta_{Drv}$ des Fahrzeugführers einen Lenkwinkel $\delta_{VARI} = \ddot{u}_{VARI}(v)\delta_{Drv}$ bzw. einen Zusatzlenkwinkel $\Delta\delta_{VARI} = (1 - \ddot{u}_{VARI}(v))\delta_{Drv}$, berechnet. Der Zusatzlenkwinkel wird dann zusätzlich zu dem von dem Fahrzeugführer kommandierten Lenkwinkel $\delta_{Drv}$ an den lenkbaren Rädern des Fahrzeugs eingestellt. Dies ist im Einzelnen nicht in der schematischen Darstellung in der Figur 1 gezeigt, sondern hier wird vereinfachend davon ausgegangen, dass der Lenkungsaktuator den Lenkwinkel $\delta_{VARI}$ einstellt, dem der Zusatzlenkwinkel $\Delta\delta_{Zus}$ an der Additionsstelle 190 überlagert wird, so dass sich an den lenkbaren Rädern des Fahrzeugs ein Lenkwinkel $\delta_{Whl} = \delta_{VARI} + \Delta\delta_{Zus}$ ergibt.

Ferner dient der Lenkwinkel $\delta_{VARI}$ auch als Eingangsgröße des Standard-ESP-System 100 sowie des Regelsystems 110. Auf der Grundlage dieses Lenkwinkels erfolgt dabei insbesondere die Berechnung der Referenzgierraten $\dot{\psi}_{ref,dyn}$ und $\dot{\psi}_{ref,stat}$.

Die Erfindung kann natürlich auch ohne die Funktion der variablen Lenkübersetzung ausgeführt werden. In diesem Fall entfällt der Block 180 und die Lenkwinkelvorgabe des Fahrzeugführers wird der Additionsstelle 190 sowie dem Standard-ESP-System 100 und dem Regelsystem 110 unmittelbar zugeführt.

Ferner kann die Erfindung sowohl bei Fahrzeugen mit einer Hinterachslenkung als bei Fahrzeugen mit einer Vorderradlenkung eingesetzt werden. Eine Kombination von Hinter- und Vorderachslenkung kommt ebenfalls in für die Anwendung der Erfindung in Frage.

Die Lenkeingriffe des Regelsystems 110 dienen im Handlingbereich dazu, das Fahrzeugfolgeverhalten zu verbessern und dadurch die Agilität des Fahrzeugs zu erhöhen. Mittels des Zusatzlenkwinkels soll dabei der Phasenverzug zwischen den Lenkbewegungen des Fahrzeugführers und der Reaktion des Fahrzeugs, der infolge der Fahrzeugträgheit und der Elastizität verschiedener Fahrwerkselemente entsteht, ausgeglichen bzw. minimiert werden. Von dem Fahrzeugführer wird dies als ein direktes Fahrverhalten wahrgenommen, das den empfundenen Fahrspaß erhöht.

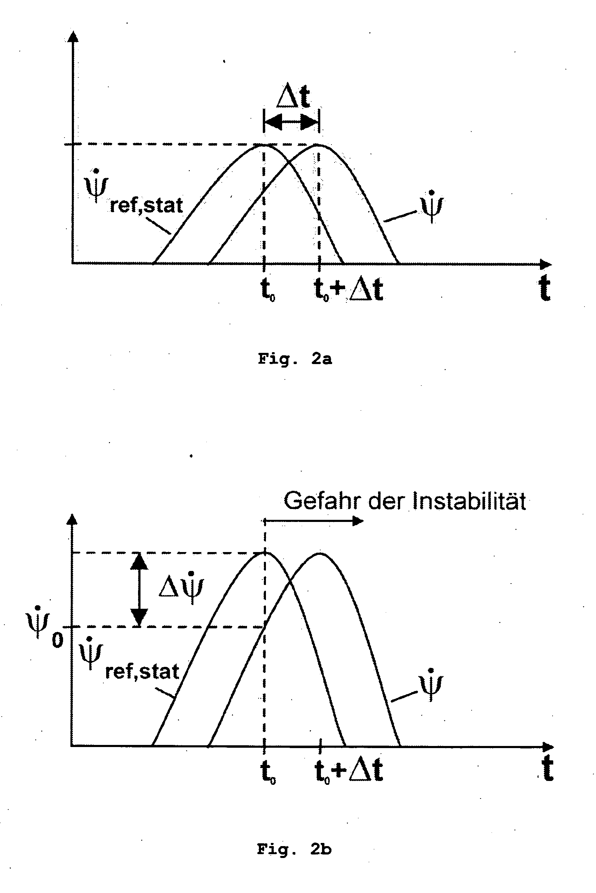

Sichtbar wird dieser Phasenverzug beispielsweise in dem Gierratenverlauf, der in der Figur 2a dargestellt ist. Hier ist die gemessene Istgierrate $\dot{\psi}$ des Fahrzeugs zusammen mit der Referenzgierrate $\dot{\psi}_{ref,stat}$ in ein Zeitdiagramm

eingetragen. Die Referenzgierrate $\dot{\psi}_{ref,stat}$ wird aus der Lenkwinkelvorgabe des Fahrzeugführers in einem statischen Fahrzeugmodell berechnet, und berücksichtigt somit weder die Fahrzeugträgheit noch die Elastizität von Fahrwerkselementen - sie repräsentiert damit den Gierratenverlauf bei einem ideal, d.h. verzögerungsfrei reagierenden Fahrzeug. Im Vergleich mit der Istgierrate $\dot{\psi}$ ergibt sich hier ein Phasenverzug $\Delta t$, der die Abweichung des tatsächlichen Fahrzeugverhaltens von dem idealen Verhalten widerspiegelt.

Darüber hinaus erhöhen die Lenkeingriffe im Handlingbereich auch die Fahrsicherheit. Muss der Fahrzeugführer beispielsweise schnell einem Hindernis ausweichen, tendiert er aufgrund der verzögerten Fahrzeugreaktion in der Regel zum "Überlenken", d.h. er stellt so große Lenkwinkel ein, dass eine Destabilisierung des Fahrzeugs droht.

Dies ist in der Figur 2b veranschaulicht: Sie zeigt die zeitlichen Verläufe der Istgierrate $\dot{\psi}$ und der Referenzgierrate $\dot{\psi}_{ref,stat}$, die sich in einer Ausweichsituation ergeben. Um zum Zeitpunkt $t_0$ die Gierrate $\dot{\psi}_0$ aufzubauen, muss wegen der verzögerten Fahrzeugreaktion ein Lenkwinkel eingestellt werden, aus dem sich zum Zeitpunkt $t_0 + \Delta t$ die Gierrate $\dot{\psi}_0 + \Delta\dot{\psi}$ ergibt, wenn der Fahrzeugführer nicht schnell genug Gegenmaßnahmen einleitet. Die Gierratenüberhöhung. $\Delta\dot{\psi}$ wird jedoch häufig von dem Fahrzeugführer nicht erwartet, so dass ein Verlust der Kontrolle über das Fahrzeug droht.

Durch die agilitätssteigernden Lenkeingriffe im Handlingbereich wird das Fahrzeug bei Ausweichmanövern einfacher beherrschbar und insbesondere wird das beschriebene Überlenken vermieden.

Ferner können anhand der Lenkeingriffe im Handlingbereich beispielsweise auch veränderte Beladungszustände des Fahrzeugs, der verwendete Reifentyp sowie der Verschleißzustand von Fahrwerkselementen berücksichtigt und deren Einfluss auf das Fahrverhalten ausgeglichen werden. Durch die Lenkeingriffe kann dem Fahrzeug auch ein bestimmtes Verhalten aufgeprägt werden, das beispielsweise durch den Fahrzeughersteller vorgegeben wird. Dies kann in einfacher Weise dadurch erreicht werden, dass die Reglerparameter des Regelsystems 110 an das gewünschte Verhalten angepasst werden.

Im Bereich kritischer Fahrzustände dienen die Lenkeingriffe dazu, das Fahrzeug zu stabilisieren. Hier lassen sich die Lenkeingriffe mit den Eingriffen des Standard-ESP-Systems 100 kombinieren. Die Lenkeingriffe können dabei auch einen für den Fahrzeugführer deutlich spürbaren ESP-Eingriff unnötig machen oder zumindest erst später notwendig werden lassen.

Eine bevorzugte Ausführungsform des Fahrdynamikreglers, der zur Durchführung der Lenkeingriffe eingesetzt wird, wird im Folgenden detailliert beschrieben.

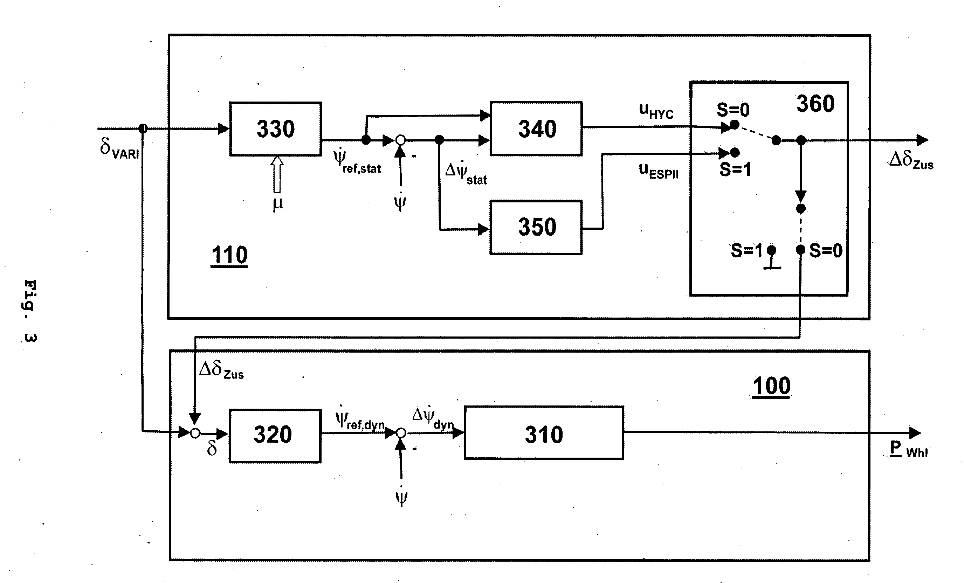

In der Figur 3 ist das Regelsystem 110 zusammen mit dem Standard-ESP-System 100 noch einmal in einem Blockdiagramm dargestellt.

Auf eine vollständige Darstellung des an sich bekannten Standard-ESP-Systems 100 wird dabei jedoch wiederum verzichtet. Gezeigt sind lediglich ein nicht näher spezifizierter Regler 310, der in einer dem Fachmann bekannten Weise ausgestaltet ist und die Ausgangsgröße des Standard-ESP-Systems 100 berechnet. Gezeigt wird zudem der Block 320 zur Berechnung der Referenzgierrate $\dot{\psi}_{ref,dyn}$.

Das Regelsystem 110 enthält einen Block 330 zur Berechnung der Referenzgierrate $\dot{\psi}_{ref,stat}$. Diese stellt die Führungsgröße für die Regler in den Blöcken 340 und 350 dar, von denen der Regler in Block 340 die Stellgröße $\mathbf{u}_{HYC}$ bestimmt, die im Handlingbereich als Zusatzlenkwinkelanforderung $\Delta\delta_{Zus}$ an den Lenkungsaktuator übermittelt wird. In dem Block 350 wird die Stellgröße $\mathbf{u}_{ESPII}$ ermittelt, die im Bereich kritischer Fahrzustände als Zusatzlenkwinkelanforderung $\Delta\delta_{Zus}$ an den Lenkungsaktuator übermittelt wird.

Der Block 360 enthält die Aktivierungslogik, welche entsprechend dem vorliegenden Fahrzustand den Regler in Block 340 oder den Regler in Block 350 frei schaltet.

Die Erkennung des vorliegenden Fahrzustandes bzw. die Zuordnung des vorliegenden Fahrzustandes zu einem Fahrzustandsbereich geschieht vorzugsweise innerhalb des Standard-ESP-Systems 110, welches der Aktivierungslogik das Flag S bereitstellt, das angibt, ob der vorliegende Fahrzustand im Handlingbereich oder im Bereich kritischer Fahrzustände liegt.

Wie oben bereits erläutert, wird das Flag S vorzugsweise durch einen Vergleich des Betrages der Gierratenabweichung $\Delta\dot{\psi}_{dyn}$ mit einem vorgegebenen Schwellenwert bestimmt. Zusätzlich kann auch ein Vergleich des Betrags der Schwimmwinkelgeschwindigkeit $\dot{\beta}$ und/oder des Betrags der Querbeschleunigung $\alpha_y$ mit jeweils einem vorgegebenen Schwellenwert vorgenommen werden.

Bei der Gierratenabweichung $\Delta\dot{\psi}_{dyn}$ handelt es sich um die Differenz zwischen der Istgierrate $\dot{\psi}$ des Fahrzeugs und der Referenzgierrate $\dot{\psi}_{ref,dyn}$, die in einem dynamischen Fahrzeugmodell in dem Block 320 berechnet wird.

Vorzugsweise handelt es sich dabei um ein lineares Einspurmodell mit den bekannten Systemgleichungen

$$\dot{\beta} = c_{11} \frac{\beta}{v} - \dot{\psi} + c_{12} \frac{\dot{\psi}}{v^2} + c_{13} \frac{\delta}{v}$$

$$\dot{\psi} = c_{21}\beta + c_{22} \frac{\dot{\psi}}{v} + c_{23}\delta$$

(1)

wo $\ddot{\psi}$ die Gierbeschleunigung bezeichnet. Der Schwimmwinkel $\beta$ und die Gierrate $\dot{\psi}$ stellen dabei die Zustandsgrößen des Systems. Die Eingangsgröße ist ein Lenkwinkel, der hier in generischer Form als $\delta$ bezeichnet und auf den im Folgenden noch näher eingegangen wird. Aufgrund des Einflusses der Eingangsgröße ergibt sich als Ausgangsgröße die Gierrate $\dot{\psi}_{ref,dyn}$ als Lösung der Gleichung 1.

Die Koeffizienten in Gleichung 1 sind gegeben durch

$$c_{11} = -\frac{c_h + c_v}{m} \qquad c_{12} = \frac{c_h l_h - c_v l_v}{m} \qquad c_{13} = \frac{c_v}{m}$$

$$c_{21} = \frac{c_h l_h - c_v l_v}{\Theta} \qquad c_{22} = -\frac{c_h l_h^2 - c_v l_v^2}{\Theta} \qquad c_{23} = \frac{c_v l_v}{\Theta}$$

wobei $c_h$ und $c_v$ die aus Reifen-, Radaufhängungs- und Lenkungselastizität resultierenden Steifigkeiten an der Hinter- und Vorderachse, $l_h$ und $l_v$ die Abstände der Hinter- und Vorderachse vom Fahrzeugschwerpunkt, $m$ die Fahrzeugmasse und $\Theta$ das Trägheitsmoment des Fahrzeugs bezüglich seiner Hochachse bezeichnen.

Für das Flag $S$ wird ein Wert von $S = 1$ berechnet, wenn der Betrag der Gierratenabweichung $\Delta\dot{\psi}_{dyn}$ größer als der vorgegebene Schwellenwert ist. Ferner können als weitere Bedingungen, dafür, dass ein Wert von $S = 1$ berechnet wird, die Forderungen vorgesehen sein, dass der Betrag der Schwimmwinkelgeschwindigkeit $\dot{\beta}$ und/oder der Betrag der Querbeschleunigung $\alpha_y$ jeweils größer sind als ein vorgegebener Schwellenwert. Die Bedingungen müssen dabei nicht unbedingt kumulativ erfüllt sein, sondern können auch durch eine ODER-Bedingung verknüpft sein. Falls die vorgesehenen Bedingungen nicht erfüllt sind, nimmt das Flag den Wert $S = 0$ an.

Bei einem Wert von $S = 0$ liegt ein Fahrzustand im Handlingbereich vor und die Aktivierungslogik in dem Block 360 schaltet den Regler in dem Block 340 frei. Dabei wird die von diesem Regler ermittelte Stellgröße $u_{HYC}$ als Zusatzlenkwinkelanforderung $\Delta\delta_{Zus}$ an den Lenkungsaktuator übermittelt.

Bei einem Wert von $S = 1$ liegt ein Fahrzustand im Bereich kritischer Fahrzustände vor und das Standard-ESP-System 110 ist aktiviert. In diesem Fall wird der Regler in dem Block 350 von der Aktivierungslogik frei geschaltet, so dass die in diesem Regler ermittelte Stellgröße $u_{ESPII}$ als Zusatzlenkwinkelanforderung $\Delta\delta_{Zus}$ an den Lenkungsaktuator weitergeleitet wird.

Um den Agilitätsgewinn im Handlingbereich nicht durch unerwünschte Bremsen- und Motoreingriffe des aktivierten Standard-ESP-Systems 110 zu gefährden, ist es ferner vorgesehen, dass die Referenzgierrate $\dot{\psi}_{ref,dyn}$ im Handlingbereich aus einer Summe des Lenkwinkels $\delta_{VARI}$ und des Zusatzlenkwinkels $\Delta\delta_{Zus}$ berechnet wird. Eingangsgröße des Blocks 320 zur Berechnung dieser Referenzgierrate ist im Handlingbereich daher der Lenkwinkel $\delta = \delta_{VARI} + \Delta\delta_{Zus}$. Im Bereich kritischer Fahrzustände wird jedoch ausschließlich der Lenkwinkel $\delta_{VARI}$ als Eingangsgröße $\delta$ dieses Blocks verwendet, insbesondere um Regelkreisschwingungen zu vermeiden, die eine Stabilisierung des Fahrzeugs beeinträchtigen könnten.

Das Zusatzlenkwinkelsignal $\Delta\delta_{Zus}$ wird daher wie in der Figur 3 dargestellt bei einem Wert von $S = 1$ über die Aktivierungslogik in dem Block 360 in das Standard-ESP-System 110 zurückgeführt. Bei einem Wert von $S = 0$, d.h. im Bereich kritischer Fahrzustände, wird die Rückführung unterbrochen.

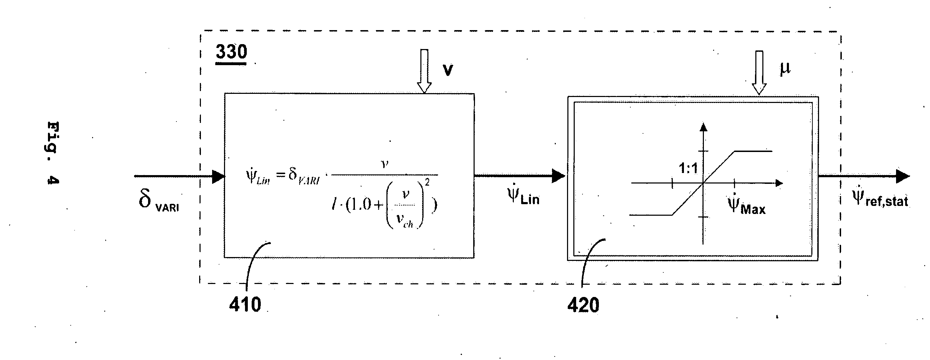

Die Bestimmung der Referenzgierrate $\dot{\psi}_{ref,stat}$, die als Führungsgröße der Regler zur Zusatzlenkwinkelberechnung in den Blöcken 350 und 360 dient, wird nun anhand von Figur 4 erläutert, die eine bevorzugte Ausführungsform des Blocks 330 zeigt.

Die Berechnung erfolgt auf der Grundlage eines statischen Fahrzeugmodells, vorzugsweise eines stationären linearen Einspurmodells, und zudem wird eine Begrenzung der Referenzgierrate $\dot{\psi}_{ref,stat}$ in Abhängigkeit von einem geschätzten Kraftschlussbeiwert $\mu$ zwischen den Reifen und der Fahrbahn vorgenommen.

Entsprechend weist der Block 330 einen linearen Block 410 zur Berechnung einer Gierrate $\dot{\psi}_{Lin}$, sowie einen nichtlinearen Block 420 zur Limitierung der Gierrate $\dot{\psi}_{Lin}$ auf, wobei die limitierte Gierrate $\dot{\psi}_{Lin}$ der Referenzgierrate

$\dot{\psi}_{ref,stat}$ entspricht.

Die Berechnung der Gierrate $\dot{\psi}_{Lin}$ in dem linearen Block 410 erfolgt dabei anhand der folgenden bekannten Beziehung aus dem stationären linearen Einspurmodell aus dem Lenkwinkel $\delta_{VARI}$ und der Fahrzeuggeschwindigkeit $v$, welche die Eingangsgrößen des Blocks 410 darstellen:

$$\dot{\psi}_{Lin} = \delta_{VARI} \cdot \frac{v}{l \cdot \left(1 + \left(v/v_{ch}\right)^2\right)} \qquad (2)$$

Der Radstand $l$ des Fahrzeugs sowie die charakteristische Geschwindigkeit $v_{ch}$ sind unveränderliche Parameter des Fahrzeugs, deren Werte in dem Block 410 hinterlegt sind. Die charakteristische Geschwindigkeit $v_{ch}$ ergibt sich dabei aus

$$v_{ch} = \sqrt{\frac{l^2 \cdot c_v \cdot c_h}{m \cdot \left(c_h \cdot l_h - c_v \cdot l_v\right)}} \qquad (3)$$

Im Gegensatz zu dem dynamischen Fahrzeugmodell nach Gleichung 1 wird in dem statischen Fahrzeugmodell das Übergangsverhalten aus der Geradeaus- in eine Kreisfahrt nicht berücksichtigt, das insbesondere durch das Trägheitsmoment $\Theta$ und die Seitensteifigkeiten $c_h$ und $c_v$ bestimmt wird. Das Modell repräsentiert somit ein idealisiertes Fahrzeug, das verzögerungsfrei auf Lenkbewegungen reagiert.

In dem Block 420 wird die Gierrate $\dot{\psi}_{Lin}$ auf Werte begrenzt, die physikalisch sinnvoll sind, d.h. auf dem vorliegenden Untergrund tatsächlich realisiert werden können. Der Untergrund wird dabei anhand des Kraftschlussbeiwerts $\mu$ charakterisiert, der beispielsweise so berechnet bzw. geschätzt werden kann, wie es in der deutschen Offenlegungsschrift DE 195 15 059 A1 beschrieben ist, auf die in diesem Zusammenhang Bezug genommen wird.

Der maximale Betrag der Gierrate $\dot{\psi}_{Lin}$ ist dabei vorzugsweise durch den Wert

$$\left|\dot{\psi}_{max}\right| = \frac{\mu \cdot g}{v} \qquad (4)$$

gegeben, wobei mit $g$ die Erdbeschleunigung bezeichnet ist. Falls der Betrag des Gierratensignals $\dot{\psi}_{Lin}$ kleiner als dieser Wert ist, wird das Signal somit in dem Block 420 nicht verändert. Ist der Betrag jedoch größer als dieser Wert, erfolgt eine Begrenzung auf diesen Wert, wobei das Vorzeichen der Gierrate $\dot{\psi}_{Lin}$ beibehalten wird.

Als Ausgangssignal des Blocks 420 bzw. des Blocks 330 ergibt sich die Referenzgierrate $\dot{\psi}_{ref,stat}$, die als Führungsgröße bei der Fahrdynamikregelung verwendet wird. Dabei werden erfindungsgemäß zwei Regler in den Blöcken 340 und 350 eingesetzt, welche die Stellgrößen $u_{HYC}$ und $u_{ESPII}$ bestimmen.

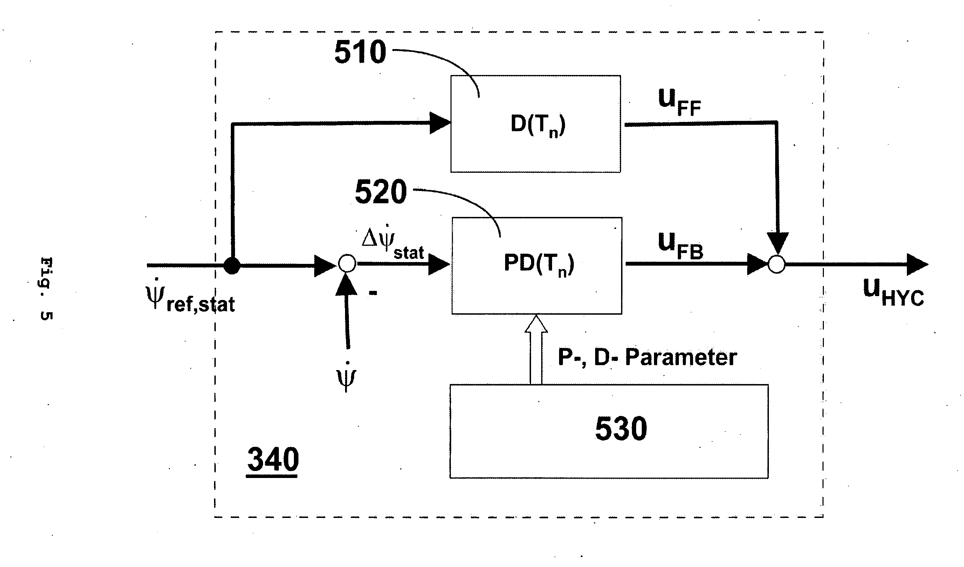

Eine bevorzugte Ausführungsform des Reglers in dem Block 340, der die Stellgröße $u_{HYC}$ ermittelt, ist in der Figur 5 dargestellt. Der Regler umfasst in dieser Ausführungsform ein Steuerglied 510 und ein Regelglied 520.

In dem Steuerglied 510 wird dabei der Steueranteil $u_{FF}$ der Stellgröße $u_{HYC}$ direkt von der Führungsgröße $\dot{\psi}_{ref,stat}$ abgeleitet, Durch diese Vorsteuerung kann dabei die im Handlingbereich geforderte hohe Dynamik erreicht werden, um das Fahrzeugfolgeverhalten wirksam zu verbessern.

Vorzugsweise ist das Steuerglied 510 als differenzierendes Glied mit Verzögerungscharakter (D-T$_n$-Glied) ausgeführt. Insbesondere kann es sich dabei um ein Vorhalteglied (D-T$_1$-Glied) handeln, bei dem das Regelungsgesetz

$$K_{FF} \cdot \frac{d\, u_{FF}}{dt} + u_{FF} = K_{FF} \cdot T_{FF} \cdot \frac{d\, \dot{\psi}_{ref,stat}}{dt} \qquad (5)$$

gilt, wobei mit $K_{FF}$ und $T_{FF}$ Reglerparameter bezeichnet sind.

In dem Block 520 wird der Regelanteil $u_{FB}$ der Stellgröße $u_{HYC}$ aus der Regelabweichung $\Delta\dot{\psi}_{stat} = \dot{\psi}_{ref,stat} - \dot{\psi}$, also der Differenz zwischen der stationären Referenzgierrate $\dot{\psi}_{ref,stat}$ und der gemessenen Istgierrate $\dot{\psi}$ des Fahrzeugs ermittelt. Vorzugsweise ist das Regelungsglied 520 dabei als Proportionalregler mit Differenzialanteil (P-D-Regler bzw. P-D-T$_n$-Regler) ausgeführt, bei dem ein Regelgesetz der Form

$$u_{FB} \ = \ K \ \cdot \ \Delta\dot{\psi}_{stat} \ + \ T_d \ \cdot \ \frac{d\Delta\dot{\psi}_{stat}}{dt} \ . \qquad\qquad (6)$$

gilt. Die Reglerparameter $K$ und $T_d$ sind dabei vorzugsweise nicht fest vorgegeben, sondern lassen sich durch einen Adaptionsmechanismus in dem Block 530 dem aktuellen Fahrzustand und bestimmten Betriebsparametern des Fahrzeugs anpassen. Die Reglerparameter können beispielsweise in Abhängigkeit der Fahrzuggeschwindigkeit $v$ und/oder dem durch den Fahrzeugführer eingestellten Bremsdruck $P_{Drv}$ unterschiedlich berechnet werden. Wie bereits beschrieben, kann dabei ebenfalls eine Anpassung an den Beladungszustand des Fahrzeugs und/oder an den Verschleißgrad von Fahrwerkselementen vorgenommen werden.

Die Stellgröße $\boldsymbol{u}_{HYC}$ ergibt sich als Summe aus dem Steueranteil $u_{FF}$ und dem Regelanteil $u_{FB}$, wobei die Regler so ausgelegt sind, dass der Steueranteil $u_{FF}$ einen größeren Anteil an der Summe hat als der Regelanteil $\boldsymbol{u}_{FB}$ und den Wert der Stellgröße $\boldsymbol{u}_{HYC}$ maßgeblich bestimmt.

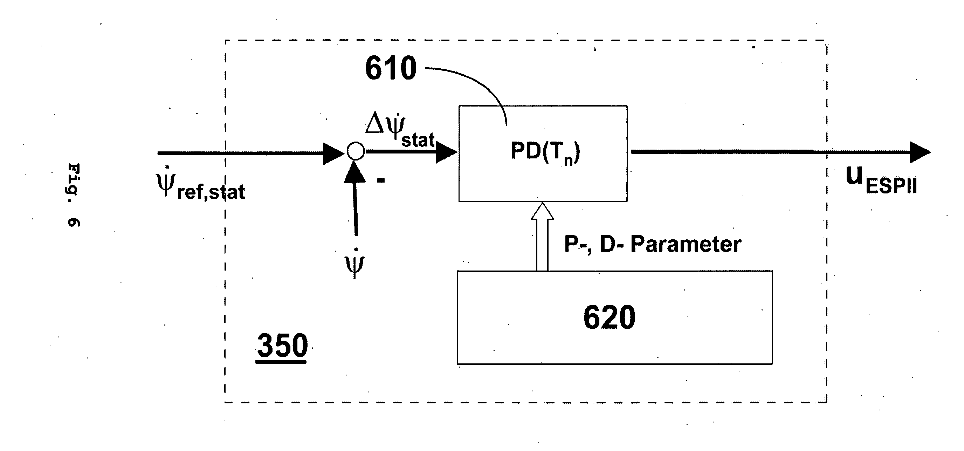

Eine bevorzugte Ausgestaltung des Blocks 350 zum Bestimmen der Stellgröße $\boldsymbol{u}_{ESPII}$, die in kritischen Fahrsituationen als Zusatzlenkwinkelanforderung $\Delta\delta_{Zus}$ an den Lenkungsaktuator übertragen wird, ist in der Figur 6 in einem Blockdiagramm dargestellt. In dieser Ausführungsform umfasst der Block 360 einen Regler 610, der vorzugsweise als P-D-Regler bzw. als P-D-T$_n$-Regler ausgeführt ist, bei dem ein zur Gleichung 6 analoges Regelgesetz der Form

$$u_{ESPII} \ = \ K' \ \cdot \ \Delta\dot{\psi}_{stat} \ + \ T'_d \ \cdot \ \frac{d\Delta\dot{\psi}_{stat}}{dt} \qquad\qquad (6)$$

gilt. Auch hier können die Reglerparameter $K'$ und $T_d$ durch einen Adaptionsmechanismus in dem Block 620, wie bereits beschrieben, an den Fahrzustand und an verschiedene Betriebsparameter des Fahrzeugs angepasst werden.

## Patentansprüche

1.  Vorrichtung zum Regeln der Fahrdynamik eines Fahrzeugs, mit Mitteln zum Erfassen wenigstens einer einen Fahrzustand repräsentierenden Fahrzustandsgröße und mit einem Fahrdynamikregler zum Ermitteln eines Zusatzlenkwinkels, nach dessen Maßgabe eine Lenkbewegung zusätzlich zu der durch einen Fahrzeugführer kommandierten Lenkbewegung ausführbar ist,
    **dadurch gekennzeichnet,**
    **dass** der Fahrdynamikregler (100, 110) wenigstens zwei Regeleinheiten (340, 350) umfasst, wobei eine erste Regeleinheit (340) des Fahrdynamikreglers (100, 110) einem Handlingbereich zugeordnet ist und eine zweite Regeleinheit (350) des Fahrdynamikreglers (100, 110) einem Bereich kritischer Fahrzustände zugeordnet ist,
    **dass** die erste Regeleinheit (340) einen Vorsteuerbestandteil (510) enthält, in dem ein Steueranteil ($u_{FF}$) des Zusatzlenkwinkels ($\Delta\delta_{Zus}$) in Abhängigkeit von einem in einem ersten statischen Fahrzeugmodell ermittelten Gierratenreferenzwert ($\dot{\psi}_{ref,stat}$) bestimmbar ist,
    **dass** die zweite Regeleinheit (350) einen Regelungsbestandteil (610) enthält, in dem ein Regelanteil ($u_{ESPII}$) des Zusatzlenkwinkels ($\Delta\delta_{Zus}$) in Abhängigkeit von einer Abweichung zwischen dem Gierratenistwert ($\dot{\psi}$) und einem Gierratenreferenzwert ($\dot{\psi}_{ref,stat}$, $\dot{\psi}_{ref,dyn}$) bestimmbar ist, wobei der Gierratenreferenzwert ($\dot{\psi}_{ref,stat}$, $\dot{\psi}_{ref,dyn}$) in dem ersten oder in einem zweiten Fahrzeugmodell ermittelbar ist,
    **dass** der Fahrdynamikregler (100, 110) ein Bestimmungsmittel zum Bestimmen eines vorliegenden Fahrzustandes aufweist, in dem der vorliegende Fahrzustand ausgehend von der Fahrzustandsgröße ($\dot{\psi}$, $\dot{\beta}$, $\alpha_y$) derart ermittelbar ist, dass das Bestimmungsmittel einen Fahrzustand im Handlingbereich ermittelt, wenn der Betrag der Abweichung zwischen einem Istwert der Fahrzustandsgröße ($\dot{\psi}$, $\beta$, $\alpha_y$) und einem Referenzwert ($\dot{\psi}_{ref,dyn}$) kleiner ist als ein vorgegebener erste Schwellenwert und/oder, wenn der Betrag der Fahrzustandsgröße ($\dot{\psi}$, $\beta$, $\alpha_y$) kleiner ist als ein vorgegebener zweiter Schwellenwert,
    **dass** das Bestimmungsmittel einen Fahrzustand im Bereich kritischer Fahrzustände ermittelt, wenn der Betrag der Abweichung zwischen dem Istwert der Fahrzustandsgröße ($\dot{\psi}$, $\dot{\beta}$, $\alpha_y$) und dem Referenzwert ($\dot{\psi}_{ref,dyn}$) größer ist als der vorgegebene erste Schwellenwert und/oder, wenn der Betrag der Fahrzustandsgröße ($\dot{\psi}$, $\beta$, $a_y$) größer ist als der vorgegebene zweite Schwellenwert und dass sie ein mit dem Bestimmungsmittel in Verbindung stehendes Aktivierungsmittel (360) aufweist, mit dem eine Regeleinheit (310, 340, 350) freischaltbar ist, die dem ermittelten Fahrzustandsbereich zugeordnet ist, und
    **dass** der bei der Bestimmung des vorliegende Fahrzustands verwendete Referenzwert ($\dot{\psi}_{ref,dyn}$) der Fahrzustandsgröße ($\dot{\psi}$) beim Vorliegen eines Fahrzustands im Handlingbereich in Abhängigkeit von einer Summe aus der Lenk-

winkelvorgabe ($\delta_{Drv}$, $\delta_{VARI}$) des Fahrzeugführers und dem Zusatzlenkwinkel ($\Delta\delta_{Zus}$) berechnet wird.

2. Vorrichtung nach Anspruch 1,
   **dadurch gekennzeichnet,**
   **dass** die erste Regeleinheit (340) einen Regelungsbestandteil (520) enthält, in dem ein Regelanteil ($u_{FB}$) des Zusatzlenkwinkels ($\Delta\delta_{Zus}$) in Abhängigkeit von einer Abweichung zwischen einem Gierratenistwert ($\dot{\psi}$) und dem in dem ersten Fahrzeugmodell ermittelten Gierratenreferenzwert ($\dot{\psi}_{Stat}$) bestimmbar ist.

3. Vorrichtung nach einem der vorangegangenen Ansprüche,
   **dadurch gekennzeichnet,**
   **dass** der von der ersten Regeleinheit (340) bestimmbare Zusatzlenkwinkel ($\Delta\delta_{Zus}$) eine Summe aus dem Steueranteil ($u_{FF}$) und dem Regelanteil ($u_{FB}$) ist, wobei der Steueranteil ($u_{FF}$) einen größeren Anteil an der Summe hat als der Regelanteil ($u_{FB}$).

4. Vorrichtung nach einem der vorangegangenen Ansprüche,
   **dadurch gekennzeichnet,**
   **dass** sie eine dritte Regeleinheit (310) umfasst, die eine Bremskraft an wenigstens einer Radbremse des Fahrzeugs und/oder ein Motormoment eines Antriebsmotors des Fahrzeugs in Abhängigkeit von einer Abweichung zwischen dem Gierratenistwert ($\dot{\psi}$) und dem in dem zweiten Fahrzeugmodell ermittelten Gierratenreferenzwert ($\dot{\psi}_{ref,dyn}$) bestimmt.

5. Vorrichtung nach einem der vorangegangenen Ansprüche,
   **dadurch gekennzeichnet,**
   **dass** es sich bei dem zweiten Fahrzeugmodell um ein dynamisches Referenzmodell handelt.

6. Vorrichtung nach einem der vorangegangenen Ansprüche,
   **dadurch gekennzeichnet,**
   **dass** der bei der Ermittlung des vorliegenden Fahrzustands verwendete Referenzwert ($\dot{\psi}_{ref,dyn}$) der Fahrzustandsgröße ($\dot{\psi}$) in dem zweiten Fahrzeugmodell berechnet wird.

7. Verfahren zum Regeln der Fahrdynamik eines Fahrzeugs, bei dem wenigstens eine einen Fahrzustand repräsentierenden Fahrzustandsgröße erfasst wird, und bei dem durch einen Fahrdynamikregler ein Zusatzlenkwinkel ermittelt wird, nach dessen Maßgabe eine Lenkbewegung zusätzlich zu der durch einen Fahrzeugführer kommandierten Lenkbewegung ausgeführt wird, **dadurch gekennzeichnet, dass** der Zusatzlenkwinkel ($\Delta\delta_{Zus}$) in wenigstens zwei Regeleinheiten (340, 350) bestimmt wird, die jeweils einem Fahrzustandsbereich zugeordnet sind, dass ausgehend von der Fahrzustandsgröße ($\dot{\psi}$, $\dot{\beta}$, $\alpha_y$) ein Fahrzustandsbereich ermittelt wird und dass jeweils die Regeleinheit (440, 450) frei geschaltet wird, die dem ermittelten Fahrzustandsbereich zugeordnet ist, dass eine erste Regeleinheit (340) des Fahrdynamikreglers (100, 110) einem Handlingbereich zugeordnet wird und dass eine zweite Regeleinheit (350) des Fahrdynamikreglers (100, 110) einem Bereich kritischer Fahrzustände zugeordnet wird, dass im Handlingbereich ein Steueranteil ($u_{FF}$) des Zusatzlenkwinkels ($\Delta\delta_{Zus}$) in direkter Abhängigkeit von einem in einem ersten statischen Fahrzeugmodell ermittelten Gierratenreferenzwert ($\dot{\psi}_{ref,stat}$) bestimmt wird, dass im Bereich kritischer Fahrzustände ein Regelanteil ($u_{ESPII}$) des Zusatzlenkwinkels ($\Delta\delta_{Zus}$) in Abhängigkeit von einer Abweichung zwischen dem Gierratenistwert ($\dot{\psi}$) und einem Gierratenreferenzwert ($\dot{\psi}_{ref,stat}$, $\dot{\psi}_{ref,dyn}$) bestimmt wird, wobei der Gierratenreferenzwert ($\dot{\psi}_{ref,stat}$, $\dot{\psi}_{ref,dyn}$) in dem ersten oder in einem zweiten Fahrzeugmodell ermittelt wird, dass der vorliegenden Fahrzustand bestimmt wird anhand eines Vergleichs zwischen einer Abweichung wenigstens eines Istwertes ($\dot{\psi}$, $\dot{\beta}$, $\alpha_y$) der Fahrzustandsgröße ($\dot{\psi}$, $\dot{\beta}$, $\alpha_y$) von einem Referenzwert ($\dot{\psi}_{ref,dyn}$, $\dot{\psi}_{ref,stat}$) der Fahrzustandsgröße und wenigstens einem vorgegebenen ersten Schwellenwert und/oder anhand eines Vergleichs zwischen wenigstens einem Istwert der Fahrzustandsgröße ($\dot{\psi}$, $\dot{\beta}$, $\alpha_y$) und wenigstens einem vorgegebenen zweiten Schwellenwert, dass ein Fahrzustand im Handlingbereich ermittelt wird, wenn der Betrag der Abweichung zwischen dem Istwert der Fahrzustandsgröße ($\dot{\psi}$, $\dot{\beta}$, $\alpha_y$) und dem Referenzwert ($\dot{\psi}_{ref,dyn}$) kleiner ist als der vorgegebene erste Schwellenwert und/oder, wenn der Betrag der Fahrzustandsgröße ($\dot{\psi}$, $\dot{\beta}$, $\alpha_y$) kleiner ist als der vorgegebene zweite Schwellenwert, dass ein Fahrzustand im Bereich kritischer Fahrzustände ermittelt wird, wenn der Betrag der Abweichung zwischen dem Istwert der Fahrzustandsgröße ($\dot{\psi}$, $\dot{\beta}$, $\alpha_y$) und dem Referenzwert ($\dot{\psi}_{ref,dyn}$) größer ist als der vorgegebene erste Schwellenwert und/oder, wenn der Betrag der Fahrzustandsgröße ($\dot{\psi}$, $\dot{\beta}$, $\alpha_y$) größer ist als der vorgegebene zweite Schwellenwert, und dass der bei der Bestimmung des vorliegende Fahrzustands verwendete Referenzwert ($\dot{\psi}_{ref,dyn}$) der Fahrzustands-

größe ($\dot{\psi}$) beim Vorliegen eines Fahrzustands im Handlingbereich in Abhängigkeit von einer Summe aus der Lenkwinkelvorgabe ($\delta_{Drv}$, $\delta_{VARl}$) des Fahrzeugführers und dem Zusatzlenkwinkel ($\Delta\delta_{Zus}$) berechnet wird.

8. Verfahren nach Anspruch 7,
   **dadurch gekennzeichnet,**
   **dass** im Handlingbereich ein Regelanteil ($u_{FB}$) des Zusatzlenkwinkels ($\Delta\delta_{Zus}$) in Abhängigkeit von einer Abweichung zwischen einem Gierratenistwert ($\dot{\psi}$) und dem in dem ersten Fahrzeugmodell ermittelten Gierratenreferenzwert ($\dot{\psi}_{Stat}$) bestimmt wird.

9. Verfahren nach einem der Ansprüche 7 bis 8,
   **dadurch gekennzeichnet,**
   **dass** der im Handlingbereich bestimmte Zusatzlenkwinkel ($\Delta\delta_{Zus}$) eine Summe aus dem Steueranteil ($u_{FF}$) und dem Regelanteil ($u_{FB}$) ist, wobei der Steueranteil ($u_{FF}$) einen größeren Anteil an der Summe hat als der Regelanteil ($u_{FB}$).

10. Verfahren nach einem der Ansprüche 7 bis 9,
    **dadurch gekennzeichnet,**
    **dass** von einer dritten Regeleinheit (310) eine Bremskraft an wenigstens einer Radbremse des Fahrzeugs und/ oder ein Motormoment eines Antriebsmotors des Fahrzeugs in Abhängigkeit von einer Abweichung zwischen dem Gierratenistwert ($\dot{\psi}$) und dem in dem zweiten Fahrzeugmodell ermittelten Gierratenreferenzwert ($\dot{\psi}_{ref,dyn}$) bestimmt wird.

11. Verfahren nach einem der Ansprüche 7 bis 10,
    **dadurch gekennzeichnet,**
    **dass** es sich bei dem zweiten Fahrzeugmodell um ein dynamisches Referenzmodell handelt.

12. Verfahren nach einem der Ansprüche 7 bis 11,
    **dadurch gekennzeichnet,**
    **dass** der bei der Ermittlung des vorliegenden Fahrzustands verwendete Referenzwert ($\dot{\psi}_{ref,dyn}$) der Fahrzustandsgröße ($\dot{\psi}$) in dem zweiten Fahrzeugmodell berechnet wird.

**Claims**

1. Vehicle dynamics control device for a vehicle, having means for detecting at least one driving state variable which represents a driving state, and having a vehicle dynamics controller for determining an additional steering angle according to which a steering movement can be carried out in addition to the steering movement which is brought about by a command of a vehicle driver,
   **characterized**
   **in that** the vehicle dynamics controller (100, 110) comprises at least two regulating units (340, 350), wherein a first regulating unit (340) of the vehicle dynamics controller (100, 110) is assigned to a handling range, and a second regulating unit (350) of the vehicle dynamics controller (100, 110) is assigned to a range of critical driving states,
   **in that** the first regulating unit (340) contains a pilot control component (510) in which a control component ($u_{FF}$) of the additional steering angle ($\Delta\delta_{add}$) can be determined as a function of a yaw rate reference value ($\dot{\psi}_{ref,stat}$) determined in a first static vehicle model,
   **in that** the second regulating unit (350) contains a regulator (160) in which a regulating component ($u_{ESPII}$) of the additional steering angle ($\Delta\delta_{add}$) can be determined as a function of a deviation between the yaw rate actual value ($\dot{\psi}$) and a yaw rate reference value ($\dot{\psi}_{ref,stat}$, $\dot{\psi}_{ref,dyn}$), wherein the yaw rate reference value ($\dot{\psi}_{ref,stat}$, $\dot{\psi}_{ref,dyn}$) can be determined in the first vehicle model or in a second vehicle model,
   **in that** the vehicle dynamics controller (100, 110) has a determining means for determining the presence of a driving state in which the present driving state can be determined on the basis of the driving state variable ($\dot{\psi}$, $\dot{\beta}$, $a_y$), in such a way that the determining means determines a driving state in the handling range when the absolute value of the deviation between an actual value of the driving state variable ($\dot{\psi}$, $\dot{\beta}$, $a_y$) and a reference value ($\dot{\psi}_{ref,dyn}$) is smaller than a predefined first threshold value and/or if the absolute value of the driving state variable ($\dot{\psi}$, $\dot{\beta}$, $a_y$) is smaller than a predefined second threshold value,
   **in that** the determining means determines a driving state in the range of critical driving states if the absolute value of the deviation between the actual value of the driving state variable ($\dot{\psi}$, $\dot{\beta}$, $a_y$) and the reference value ($\dot{\psi}_{ref,dyn}$) is greater than the predefined first threshold value and/or if the absolute value of the driving state variable ($\dot{\psi}$, $\dot{\beta}$, $a_y$) is greater than the predefined second threshold value, and in that said device has an activation means (360) which is connected to the determining means and with which a regulating unit (310, 340, 350), which is assigned to the determined driving state range, can be enabled, and

**in that**, when a driving state in the handling range is present, the reference value ($\dot{\psi}_{ref,dyn}$), used in the determination of the present driving state, of the driving state variable ($\dot{\psi}$) is calculated as a function of a sum of the predefined steering angle ($\delta_{Drv}$, $\delta_{VARI}$) of the vehicle driver and the additional steering angle ($\Delta_{\delta add}$).

2. Device according to Claim 1, **characterized in that** the first regulating unit (340), contains a regulator (520) in which a regulating component ($u_{FB}$) of the additional steering angle ($\Delta_{\delta add}$) can be determined as a function of a deviation between a yaw rate actual value ($\dot{\psi}$) and the yaw rate reference value ($\dot{\psi}_{Stat}$) determined in the first vehicle model.

3. Device according to one of the preceding claims,
**characterized**
**in that** the additional steering angle ($\Delta\delta_{add}$) which can be determined by the first regulating unit (340) is a sum of the control component ($u_{FF}$) and the regulating component ($u_{FB}$), wherein the control component ($u_{FF}$) forms a larger proportion of the sum than the regulating component ($u_{FB}$).

4. Device according to one of the preceding claims,
**characterized**
**in that** said device comprises a third regulating unit (310) which determines a braking force at at least one wheel brake of the vehicle and/or an engine torque of a drive engine of the vehicle as a function of a deviation between the yaw rate actual value ($\dot{\psi}$) and the yaw rate reference value ($\dot{\psi}_{ref,dyn}$) determined in the second vehicle model.

5. Device according to one of the preceding claims,
**characterized**
**in that** the second vehicle model is a dynamic reference model.

6. Device according to one of the preceding claims,
**characterized**
**in that** the reference value ($\dot{\psi}_{ref,dyn}$), used in the determination of the present driving state, of the driving state variable ($\dot{\psi}$) is calculated in the second vehicle model.

7. Vehicle dynamics regulating method for a vehicle, in which at least one driving state variable which represents a driving state is detected, and in which an additional steering angle is determined by means of a vehicle dynamics controller, according to which additional steering angle a steering movement is carried out in addition to the steering movement which is brought about by a vehicle driver command, **characterized in that** the additional steering angle ($\Delta\delta_{add}$) is determined in at least two regulating units (340, 350) which are each assigned to a driving state range, **in that** a driving state range is determined on the basis of the driving state variable ($\dot{\psi}, \dot{\beta}, a_y$), and **in that** in each case the regulating unit (440, 450) which is assigned to the determined driving state range is enabled, **in that** a first regulating unit (340) of the vehicle dynamics controller (100, 110) is assigned to a handling range, and **in that** a second regulating unit (350) of the vehicle dynamics controller (100, 110) is assigned to a range of critical driving states, **in that** in the handling range a control component ($u_{FF}$) of the additional steering angle ($\Delta\delta_{add}$) is determined as a direct function of a yaw rate reference value ($\dot{\psi}_{ref,stat}$) determined in a first static vehicle model, **in that** in the range of a critical driving state a regulating component ($u_{ESPII}$) of the additional steering angle ($\Delta\delta_{add}$) is determined as a function of a deviation between the yaw rate actual value ($\dot{\psi}$) and a yaw rate reference value ($\dot{\psi}_{ref,stat}$, $\dot{\psi}_{ref,dyn}$), wherein the yaw rate reference value ($\dot{\psi}_{ref,stat}$, $\dot{\psi}_{ref,dyn}$) is determined in the first or in a second vehicle model, **in that** the present driving state is determined by means of a comparison between a deviation of at least one actual value ($\dot{\psi}, \dot{\beta}, a_y$) of the driving state variable ($\dot{\psi}, \dot{\beta}, a_y$) from a reference value ($\dot{\psi}_{ref,dyn}$, $\dot{\psi}_{ref,stat}$) of the driving state variable and at least one predefined first threshold value and/or by means of a comparison between at least one actual value of the driving state variable ($\dot{\psi}, \dot{\beta}, a_y$) and at least one predefined second threshold value, **in that** a driving state in the handling range is determined if the absolute value of the deviation between the actual value of the driving state variable ($\dot{\psi}, \dot{\beta}, a_y$) and the reference value ($\dot{\psi}_{ref,dyn}$) is smaller than the predefined first threshold value and/or if the absolute value of the driving state variable ($\dot{\psi}, \dot{\beta}, a_y$) is smaller than the predefined second threshold value, **in that** a driving state in the range of critical driving states is determined if the absolute value of the deviation between the absolute value of the driving state variable ($\dot{\psi}, \dot{\beta}, a_y$) and the reference value ($\dot{\psi}_{ref,dyn}$) is greater than the predefined first threshold value and/or if the actual value of the driving state variable ($\dot{\psi}, \dot{\beta}, a_y$) is greater than the predefined second threshold value, and

**in that**, when a driving state in the handling range is present, the reference value ($\dot\psi_{ref,dyn}$), used in the determination of the present driving state, of the driving state variable ($\dot\psi$) is calculated as a function of a sum of the predefined steering angle ($\delta_{Drv}$, $\delta_{VARI}$) of the vehicle driver and the additional steering angle ($\Delta\delta_{add}$).

8. Method according to Claim 7,
**characterized**
**in that** in the handling range a regulating component ($u_{FB}$) of the additional steering angle ($\Delta\delta_{add}$) is determined as a function of a deviation between the yaw rate actual value ($\dot\psi$) and the yaw rate reference value ($\dot\psi_{Stat}$) determined in the first vehicle model.

9. Method according to one of Claims 7 to 8,
**characterized**
**in that** the additional steering angle ($\Delta\delta_{add}$) determined in the handling range is a sum of the control component ($u_{FF}$) and the regulating component ($u_{FB}$), wherein the control component ($u_{FF}$) forms a larger proportion of the sum than the regulating component ($u_{FB}$).

10. Method according to one of Claims 7 to 9,
**characterized**
**in that** a third regulating unit (310) determines a braking force at at least one wheel brake of the vehicle and/or of an engine torque of a drive engine of the vehicle as a function of a deviation between the yaw rate actual value ($\dot\psi$) and the yaw rate reference value ($\dot\psi_{ref,dyn}$) determined in the second vehicle model.

11. Method according to one of Claims 7 to 10,
**characterized**
**in that** the second vehicle model is a dynamic reference model.

12. Method according to one of Claims 7 to 11,
**characterized**
**in that** the reference value ($\dot\psi_{ref,dyn}$), used in the determination of the present driving state, of the driving state variable ($\dot\psi$) is calculated in the second vehicle model.

**Revendications**

1. Ensemble de régulation de la dynamique de roulage d'un véhicule, l'ensemble présentant des moyens de saisie d'au moins une grandeur d'état de roulage qui représente une situation de roulage et un régulateur de dynamique de roulage qui détermine un angle supplémentaire de braquage sur lequel un déplacement de braquage peut être exécuté en plus du déplacement de braquage commandé par le conducteur du véhicule, **caractérisé en ce que** le régulateur (100, 110) de dynamique de roulage comporte au moins deux unités de régulation (340, 350), une première unité de régulation (340) du régulateur (100, 110) de dynamique de roulage étant associée à une plage de manipulation et une deuxième unité de régulation (350) du régulateur (100, 110) de dynamique du roulage étant associée à une plage de situations critiques de roulage,
**en ce que** la première unité de régulation (340) contient un composant (510) de pré-commande dans lequel une partie de commande ($u_{FF}$) de l'angle supplémentaire de braquage ($\Delta\delta_{supp}$) peut être déterminée en fonction d'une valeur de référence ($\dot\psi_{ref,\,stat}$) de la vitesse de lacet déterminée dans un premier modèle statique du véhicule,
**en ce que** la deuxième unité de régulation (350) contient un composant de régulation (610) dans lequel une partie de réglage ($u_{ESPII}$) de l'angle supplémentaire de braquage ($\Delta\delta_{supp}$) peut être déterminée en fonction de l'écart entre la valeur effective ($\dot\psi$) de la vitesse de lacet et la valeur de référence ($\dot\psi_{ref,stat}$, $\dot\psi_{ref,dyn}$) de la vitesse de lacet, la vitesse de référence ($\dot\psi_{ref,stat}$, $\dot\psi_{ref,dyn}$) de la vitesse de lacet pouvant être déterminée dans le premier modèle du véhicule ou dans un deuxième modèle du véhicule,
**en ce que** le régulateur (100, 110) de la dynamique de roulage présente un moyen de détermination qui détermine la situation de roulage qui prévaut et dans lequel la situation de roulage qui prévaut peut être déterminée à partir des grandeurs d'état de roulage ($\dot\psi$, $\dot\beta$, $\alpha_y$), de sorte que le moyen de détermination détermine que la situation de roulage est dans la plage de manipulation si le niveau de l'écart entre la valeur effective de la grandeur ($\dot\psi$, $\dot\beta$, $\alpha_y$) d'état de roulage et une valeur de référence ($\dot\psi_{ref,\,den}$) est inférieur à une première valeur de seuil prédéterminée et/ou si le niveau de la grandeur d'état de roulage ($\dot\psi$, $\dot\beta$, $\alpha_y$) est inférieur à une deuxième valeur de seuil prédéterminée,
**en ce que** le moyen de détermination détermine que la situation de roulage est dans la plage des situations critiques de roulage si le niveau de l'écart entre la valeur effective de la grandeur d'état de roulage ($\dot\psi$, $\dot\beta$, $\alpha_y$) et la valeur de

référence ($\dot{\psi}_{ref,dyn}$) est supérieur à la première valeur de seuil prédéterminée et/ou si le niveau de la grandeur d'état de roulage ($\dot{\psi}$, $\dot{\beta}$, $\alpha_y$) est supérieur à la deuxième valeur de seuil prédéterminée,

**en ce que** l'ensemble présente un moyen d'activation (360) qui communique avec le moyen de détermination et par lequel une unité de régulation (310, 340, 350) associée à la plage déterminée d'état de roulage peut être commutée et

**en ce que** la valeur de référence ($\dot{\psi}_{ref,dyn}$) de la grandeur d'état de roulage ($\dot{\psi}$) utilisée dans la détermination de la situation de roulage qui prévaut est calculée en fonction de la somme de l'angle de braquage ($\delta_{drv}$, $\delta_{ARI}$) du conducteur du véhicule et l'angle supplémentaire de braquage ($\Delta\delta_{supp}$) lorsque la situation de roulage se trouve dans la plage de manipulation.

2. Ensemble selon la revendication 1, **caractérisé en ce que** la première unité de régulation (340) contient un composant de régulation (520) dans lequel une partie de réglage ($u_{FB}$) de l'angle supplémentaire de braquage ($\Delta\delta_{supp}$) peut être déterminée en fonction de l'écart entre la valeur effective ($\dot{\psi}$) de la vitesse de lacet et la valeur de référence ($\dot{\psi}_{Stat}$) de la vitesse de lacet déterminée dans le premier modèle du véhicule.

3. Ensemble selon l'une des revendications précédentes, **caractérisé en ce que** l'angle supplémentaire de braquage ($\Delta\delta_{supp}$) qui peut être déterminé par la première unité de régulation (340) est la somme de la partie de commande ($u_{FF}$) et de la partie de réglage ($u_{FB}$), la partie de commande ($u_{FF}$) présentant une plus grande partie de la somme que la partie de régulation ($u_{FB}$)

4. Ensemble selon l'une des revendications précédentes, **caractérisé en ce qu'**il présente une troisième unité de régulation (310) qui détermine la force de freinage appliquée sur au moins un frein de roue du véhicule et/ou le couple du moteur d'entraînement du véhicule en fonction de l'écart entre la valeur effective ($\dot{\psi}$) de la vitesse de lacet et la valeur de référence ($\dot{\psi}_{ref,dyn}$) de la vitesse de lacet déterminée dans le deuxième modèle du véhicule.

5. Ensemble selon l'une des revendications précédentes, **caractérisé en ce que** le deuxième modèle du véhicule est un modèle de référence dynamique.

6. Ensemble selon l'une des revendications précédentes, **caractérisé en ce que** la valeur de référence ($\dot{\psi}_{ref,dyn}$)de la grandeur d'état de roulage ($\dot{\psi}$) utilisée pour déterminer la situation de roulage qui prévaut est calculée dans le deuxième modèle du véhicule.

7. Procédé de régulation de la dynamique de roulage d'un véhicule, dans lequel au moins une grandeur d'état de roulage qui représente une situation de roulage est saisie et dans lequel un angle supplémentaire de braquage sur lequel un déplacement de braquage est exécuté en plus du déplacement de braquage commandé par le conducteur du véhicule est déterminé par un régulateur de dynamique du roulage,

**caractérisé en ce que**

l'angle supplémentaire de braquage ($\Delta\delta_{supp}$) est déterminé dans au moins deux unités de régulation (340, 350) associées chacune à une plage de situation de roulage,

**en ce que** partant de la grandeur d'état de roulage ($\dot{\psi}$, $\dot{\beta}$, $\alpha_y$), une plage de situation de roulage est déterminée et **en ce que** l'unité de régulation (440, 450) associée à la plage de situation de roulage qui a été déterminée est commutée librement,

**en ce qu'**une première unité de régulation (340) du régulateur (100, 110) de dynamique du roulage est associée à une plage de manipulation,

**en ce qu'**une deuxième unité de régulation (350) du régulateur (100, 110) de dynamique de roulage est associée à une plage de situations critiques de roulage,

**en ce que** dans la plage de manipulation, une partie de commande ($u_{FF}$) de l'angle supplémentaire de braquage ($\Delta\delta_{supp}$) est déterminée sous la dépendance directe d'une valeur de référence ($\dot{\psi}_{ref,stat}$) de vitesse de lacet déterminée dans un premier modèle statique du véhicule,

**en ce que** dans la plage de situation critique de roulage, une partie de régulation ($u_{ESPII}$) de l'angle supplémentaire de braquage ($\Delta\delta_{supp}$) est déterminée en fonction de l'écart entre la valeur effective ($\dot{\psi}$) de la vitesse de lacet et une valeur de référence ($\dot{\psi}_{ref,stat}$, $\dot{\psi}_{ref,dyn}$) de la vitesse de lacet, la valeur de référence ($\dot{\psi}_{ref,stat}$, $\dot{\psi}_{ref,dyn}$) de la vitesse de lacet étant déterminée dans le premier modèle du véhicule ou dans un deuxième modèle du véhicule,

**en ce que** la situation de roulage qui prévaut est déterminée à l'aide d'une comparaison entre l'écart entre la valeur effective ($\dot{\psi}$, $\dot{\beta}$, $\alpha_y$) de la grandeur d'état de roulage ($\dot{\psi}$, $\dot{\beta}$, $\alpha_y$) et une valeur de référence ($\dot{\psi}_{ref,dyn}$, $\dot{\psi}_{ref,stat}$) de la grandeur d'état de roulage et au moins une première valeur de seuil prédéterminée et/ou à l'aide de la comparaison entre au moins la valeur effective de la grandeur d'état de roulage ($\dot{\psi}$, $\dot{\beta}$, $\alpha_y$) et au moins une deuxième valeur de seuil prédéterminée,

**en ce que** la situation de roulage est déterminée comme étant dans la plage de manipulation si le niveau de l'écart entre la valeur effective de la grandeur d'état de roulage ($\dot\psi$, $\dot\beta$, $\alpha_y$) et la valeur de référence ($\dot\psi_{ref,dyn}$) est inférieure à la première valeur de seuil prédéterminée et/ou si le niveau de la grandeur d'état de roulage ($\dot\psi$, $\dot\beta$, $\alpha_y$) est inférieur à la deuxième valeur de seuil prédéterminée,

**en ce que** la situation de roulage est déterminée comme étant dans la plage des situations critiques de roulage si le niveau de l'écart entre la valeur effective de la grandeur d'état de roulage ($\dot\psi$, $\dot\beta$, $\alpha_y$) et la valeur de référence ($\dot\psi_{ref,dyn}$) est supérieur à la première valeur de seuil prédéterminée et/ou si le niveau de la grandeur d'état de roulage ($\dot\psi$, $\dot\beta$, $\alpha_y$) est supérieur à la deuxième valeur de seuil prédéterminée et

**en ce que** la valeur de référence ($\dot\psi_{ref,dyn}$) de la grandeur d'état de roulage ($\dot\psi$) utilisée pour déterminer la situation de roulage qui prévaut est déterminée en fonction de la somme de l'angle de braquage $\delta_{drv}$, $\delta_{VARI}$) imposée par le conducteur du véhicule et l'angle supplémentaire de braquage ($\Delta\delta_{supp}$) lorsque la situation de roulage est située dans la plage de manipulation.

8. Procédé selon la revendication 7, **caractérisé en ce que** dans la plage de manipulation, la partie de réglage ($u_{FB}$) de l'angle supplémentaire de braquage ($\Delta\delta_{supp}$) est déterminée en fonction de l'écart entre la valeur effective ($\dot\psi$) de la vitesse de lacet et la valeur de référence ($\dot\psi_{Stat}$) de la vitesse de lacet déterminée dans le premier modèle du véhicule.

9. Procédé selon l'une des revendications 7 à 8, **caractérisé en ce que** l'angle supplémentaire de braquage ($\Delta\delta_{supp}$) déterminé dans la plage de manipulation est la somme de la partie de commande ($u_{FF}$) et de la partie de régulation ($u_{FB}$), la partie de commande ($u_{FF}$) représentant une plus grande partie de la somme que la partie de régulation ($u_{FB}$).

10. Procédé selon l'une des revendications 7 à 9, **caractérisé en ce qu'**une troisième unité de régulation (310) détermine la force de freinage exercée sur au moins un frein de roue du véhicule et/ou le couple du moteur d'entraînement du véhicule en fonction de l'écart entre la valeur effective ($\dot\psi$) de la vitesse de lacet et la valeur de référence ($\dot\psi_{ref,dyn}$) de la vitesse de lacet déterminée dans le deuxième modèle du véhicule.

11. Procédé selon l'une des revendications 7 à 10, **caractérisé en ce que** le deuxième modèle du véhicule est un module dynamique de référence.

12. Procédé selon l'une des revendications 7 à 11, **caractérisé en ce que** la valeur de référence ($\dot\psi_{ref,dyn}$) de la grandeur d'état de roulage ($\dot\psi$) utilisée dans la détermination de la situation de roulage qui prévaut est calculée dans le deuxième modèle du véhicule.

Fig. 1

Fig. 2a

Fig. 2b

Fig. 3

**Fig. 4**

$$\dot{\psi}_{Lin} = \delta_{VARI} \cdot \frac{v}{l \cdot \left(1.0 + \left(\dfrac{v}{v_{ch}}\right)^2\right)}$$

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005047086 A1
- US 20050043874 A1
- US 68956318 B1
- DE 10141273 A1
- DE 19515059 A1